(19) Europäisches Patentamt
European Patent Office
Office européen des brevets

(11)  **EP 1 910 779 B1**

(12)  **EUROPÄISCHE PATENTSCHRIFT**

(45) Veröffentlichungstag und Bekanntmachung des Hinweises auf die Patenterteilung:
**23.11.2011  Patentblatt 2011/47**

(51) Int Cl.:
***G01D 5/244*** (2006.01)

(21) Anmeldenummer: **06776142.9**

(22) Anmeldetag: **07.07.2006**

(86) Internationale Anmeldenummer:
**PCT/EP2006/006645**

(87) Internationale Veröffentlichungsnummer:
**WO 2007/012390 (01.02.2007 Gazette 2007/05)**

(54) **VERFAHREN ZUM KORRIGIEREN VON INTERPOLATIONSFEHLERN EINER MASCHINE, INSBESONDERE EINES KOORDINATENMESSGERÄTES**

METHOD FOR CORRECTION OF INTERPOLATION ERRORS ON A MACHINE IN PARTICULAR A COORDINATE MEASURING DEVICE

PROCEDE POUR CORRIGER LES ERREURS D'INTERPOLATION D'UNE MACHINE, NOTAMMENT D'UN APPAREIL DE MESURE DE COORDONNEES

(84) Benannte Vertragsstaaten:
**DE FR IT**

(30) Priorität: **28.07.2005  DE 102005036719**

(43) Veröffentlichungstag der Anmeldung:
**16.04.2008  Patentblatt 2008/16**

(73) Patentinhaber: **Carl Zeiss Industrielle Messtechnik GmbH
73447 Oberkochen (DE)**

(72) Erfinder:
• **GRUPP, Guenter
  89558 Boehmenkirch (DE)**
• **KAMMLEITER, Berndt
  73447 Oberkochen (DE)**

(74) Vertreter: **Duhme, Torsten
Witte, Weller & Partner
Patentanwälte
Postfach 10 54 62
70047 Stuttgart (DE)**

(56) Entgegenhaltungen:
**EP-A- 0 048 851    DE-A1- 4 443 898
US-A- 5 305 241**

**Beschreibung**

Die vorliegende Erfindung betrifft ein Verfahren zum Korrigieren von Interpolationsfehlern einer Maschine, insbesondere eines Koordinatenmessgerätes, sowie eine entsprechende maschine.

Koordinatenmessgeräte werden typischerweise verwendet, um einzelne Raumkoordinaten und/oder die Objektform eines Messobjekts messtechnisch zu bestimmen, beispielsweise zur Qualitätskontrolle bei der Herstellung von Werkstücken. Die bekannten Koordinatenmessgeräte besitzen einen sogenannten Tastkopf, der an einem Verschiebegestell angeordnet ist und in zumindest einer Raumrichtung verfahren werden kann. Häufig ist an dem Tastkopf ein Taststift angeordnet, mit dem ein ausgewählter Messpunkt an dem Messobjekt angetastet wird. Die Raumkoordinaten des Messpunktes lassen sich dann aus der Position des Tastkopfes bestimmen, wobei häufig auch noch die Auslenkungen des Taststiftes beim Antasten berücksichtigt werden. Alternativ hierzu gibt es Koordinatenmessgeräte, die einen Messpunkt am Messobjekt berührungslos erfassen, beispielsweise mit optischen Mitteln.

Um die Position des Kopfes im Messvolumen zu bestimmen, besitzen Koordinatenmessgeräte Maßverkörperungen für die einzelnen Bewegungsachsen. Hierbei handelt es sich häufig um Glasmaßstäbe, auf denen eine periodische Teilung, z.B. in Form von Markierungsstrichen, aufgebracht sind. Die periodische Teilung wird beim Verfahren des Kopfes mit einem Sensor abgetastet. Die Genauigkeit der Maßverkörperung bestimmt daher die Messgenauigkeit des Koordinatenmessgerätes.

Neben Glasmaßstäben gibt es auch andere Maßverkörperungen mit einer periodischen Teilung, z.B. induktiv abgetastete Maßverkörperungen. Unabhängig von der Art der Maßverkörperung ist jede Messung eines Koordinatenmessgerätes mit Messfehlern behaftet, die verschiedene Ursachen haben können. Zu den Ursachen zählen Fertigungstoleranzen und Nichtlinearitäten in den Führungsbahnen, Verformungen infolge thermischer Einflüsse und/oder unter Last, Fertigungstoleranzen bei den Maßverkörperungen und anderes. Um die Auswirkung solcher Messfehler zu reduzieren, ist es bekannt, die Positionsmesswerte, die das Koordinatenmessgerät von seinen Positionsmesseinrichtungen erhält, rechnerisch zu korrigieren. Dazu werden Korrekturwerte üblicherweise in der Steuer- und Auswerteeinheit des Koordinatenmessgerätes hinterlegt, wobei die Korrekturwerte selbst aus einer Referenzmessung bestimmt werden, die beispielsweise mit einem Laserinterferometer durchgeführt wird. Ein Verfahren ist beispielsweise in DE 1 638 032 A1 beschrieben. Es ist aus dieser Druckschrift ferner bekannt, eine Fehlerkorrektur mit Hilfe von Interpolationswerten durchzuführen, wobei die Interpolationswerte aus der Interpolation benachbarter Bezugspunkte bestimmt werden.

Darüber hinaus werden Interpolationswerte bei Koordinatenmessgeräten häufig verwendet, um das Auflösungsvermögen und damit auch die Messgenauigkeit des Koordinatenmessgerätes rechnerisch zu erhöhen. So beschreibt DE 27 29 697 A1 ein Verfahren zum Interpolieren von weg- bzw. winkelabhängigen periodischen Signalen eines lichtelektrischen, digitalen Längen- oder Winkelmesssystems. Ein generelles Problem ist hierbei, dass die Messgenauigkeit letztlich von der Qualität der Interpolationswerte abhängt. Fehler bei den messtechnisch erfassten Positionssignalen wirken sich auch nachteilig auf die Interpolationswerte aus. In DE 27 29 697 A1 wird daher vorgeschlagen, vor Anwendung des Interpolationsalgorithmus eine Korrektur an den Messwerten vorzunehmen, die für die Interpolation herangezogen werden. Typischerweise sind dies Digitalwerte, die aus den analogen Messsignalen der Maßverkörperung mit Hilfe von A/D-Wandlern erzeugt werden. Es wird vorgeschlagen, die Digitalwerte auf Symmetrie, Amplitudengleichheit und 90°-Phasenversatz zu korrigieren, um entsprechende Schwankungen in den analogen Messsignalen zu eliminieren.

Ein ähnliches Verfahren ist aus DE 34 13 855 A1 bekannt. Auch hier wird vorgeschlagen, einen bezüglich Amplitude, Gleichspannungsanteils und Phasenlage korrigierten Signalverlauf bei der Interpolationsberechnung zu Grunde zu legen.

Aus EP 0 048 851 B1 ist es bekannt, Interpolationswerte mit Hilfe von Korrekturwerten zu korrigieren, die aus einer Referenzmessung mit einem Laserinterferometer gewonnen wurden. Die Interpolationswerte werden hiernach also genauso kalibriert, wie die nicht-interpolierten Positionsmesswerte des Koordinatenmessgerätes.

Aus DE 34 26 863 A1 ist es ferner bekannt, in Ergänzung zu einer linearen Maßverkörperung (dort als direktes Messsystem bezeichnet) noch ein rotatorisches (indirektes) Messsystem zu verwenden, wobei die Messauflösung des rotatorischen Messsystems etwa zehn Mal höher ist als die Messauflösung des linearen Lagemesssystems. Auf diese weise werden "Interpolationswerte" also mit Hilfe eines zweiten Messsystems gewonnen.

Aus DE 33 02 063 A1 ist es bekannt, die gemessenen Istwerte bei einem Koordinatenmessgerät vor ihrer Weiterverarbeitung mit Korrekturwerten zu überlagern, die für alle möglichen Positionen, thermischen Zustände und Lastbedingungen ermittelt wurden. Um einen Eingriff in den Regelkreis der Maschine zu vermeiden, erfolgt die Überlagerung der berechneten Korrekturwerte so, dass dem Lageregelkreis des Koordinatenmessgerätes ein korrigierter Positionswert vorgetäuscht wird. Hierdurch soll eine Änderung des Stabilitätsverhaltens vermieden werden.

US 5305241 A und DE 4443898 A1 beschreiben Verfahren zur Korrektar von Interpolationsfehlern.

Allen bekannten Verfahren ist gemeinsam, dass zum Berechnen und Korrigieren der Interpolationswerte spezielle Hardwarekomponenten benötigt werden, was in Bezug auf die Herstellungskosten des entsprechenden Koordinatenmessgerätes nachteilig ist.

Es ist daher eine Aufgabe der vorliegenden Erfindung, ein Verfahren anzugeben, um Interpolationsfehler bei einem Koordinatenmessgerät mit einer periodisch geteilten Maßverkörperung einfach und kostengünstig zu korrigieren.

Es ist ferner eine Aufgabe der vorliegenden Erfindung, ein entsprechendes Koordinatenmessgerät anzugeben.

Gemäß einem Aspekt der Erfindung wird diese Aufgabe durch ein Verfahren zum Korrigieren von Interpolationsfehlern eines Koordinatenmessgerätes gelöst, das folgende Schritte aufweist:

- Verfahren des Kopfes an eine Vielzahl von Positionen,

- Bestimmen einer Vielzahl von Positionsdaten, die den Positionen des Kopfes entsprechen, mit Hilfe der Positionsmesseinrichtung, wobei die Vielzahl der Positionsdaten einen Positionsverlauf repräsentieren,

- Bestimmen eines periodischen Anteils in dem Positionsverlauf mit einer Periode, die in etwa der periodischen Teilung der Maßverkörperung entspricht, und

- Bestimmen von Korrekturwerten zum Korrigieren der Interpolationswerte derart, dass der periodische Anteil zumindest reduziert wird.

Die Aufgabe wird ferner durch eine Maschine, insbesondere ein Koordinatenmessgerät gelöst, mit einem verfahrbaren Kopf, mit einer Positionsmesseinrichtung zum Bestimmen von Verfahrpositionen des Kopfes, wobei die Positionsmesseinrichtung eine Maßverkörperung mit einer periodischen Teilung beinhaltet, mit einem Prozessor zum Bestimmen von Interpolationswerten, die die periodische Teilung weiter unterteilen, und mit einer Einheit zum Bestimmen von Korrekturwerten zum Korrigieren der Interpolationswerte, wobei die Einheit einen ersten Teil aufweist, der dazu ausgebildet ist, einen Positionsverlauf mit einer Vielzahl von Positionsdaten aufzunehmen, die wechselnden Positionen des Kopfes entsprechen, wobei die Einheit ferner einen zweiten Teil aufweist, der dazu ausgebildet ist, einen periodischen Anteil in dem Positionsverlauf mit einer Periode zu bestimmen, die in etwa der periodischen Teilung der Maßverkörperung entspricht, und wobei die Einheit einen dritten Teil aufweist, der dazu ausgebildet ist, die Korrekturwerte derart zu bestimmen, dass der periodische Anteil zumindest reduziert wird.

Das neue Verfahren und die neue Maschine resultieren aus der Erkenntnis, dass der Positionsverlauf beim Verfahren des Kopfes einen periodischen Anteil aufweist, dessen Periode in etwa der Periode der Maßverkörperung entspricht. Dieser Anteil erklärt sich nicht aus der tatsächlichen Bewegung des Kopfes. Dieser periodische Anteil findet sich beispielsweise im sogenannten Schleppabstand wieder. Der Schleppabstand ist die Lageabweichung zwischen der Sollposition und der Istposition beim Verfahren des Kopfes. Er wird üblicherweise vom Lageregler verwendet, um die Verfahrenbewegungen des Kopfes zu steuern. Grundsätzlich könnte ein periodischer Anteil im Positionsverlauf des Kopfes auf Schwingungen bei den Verfahrenbewegungen des Kopfes hindeuten. Der periodische Anteil ist jedoch auch dann vorhanden, wenn man entsprechende Schwingungen auf Grund der Randbedingungen beim Verfahren des Kopfes ausschließen kann. Zudem ist die Übereinstimmung des periodischen Anteils mit der Periode der Teilung der Maßverkörperung überraschend. Es liegt daher der Schluss nahe, dass der periodische Anteil im gemessenen Positionsverlauf tatsächlich gar nicht vorhanden ist, sondern nur auf Grund von Interpolationsfehlern zwischen den Teilstrichen der Maßverkörperung erscheint. Basierend auf dieser Erkenntnis wurden Versuche unternommen, Korrekturwerte zum Korrigieren der Interpolationswerte danach zu bestimmen, dass der periodische Anteil im Positionsverlauf des Kopfes zumindest weitgehend eliminiert wird. Diese Versuche haben gezeigt, dass sich die Messgenauigkeit des Koordinatenmessgerätes tatsächlich steigern lässt.

Wenngleich die Auswertung des Schleppabstandes ein bevorzugtes Ausführungsbeispiel darstellt, ist die Erfindung hierauf nicht beschränkt. Der periodische Anteil zeigt sich nämlich auch, wenn die von der Maßverkörperung gelieferten "Istpositionen" des Kopfes zu Grunde gelegt werden. Es ist daher auch möglich, den Positionsverlauf direkt auszuwerten.

Das neue Verfahren besitzt den Vorteil, dass zum Korrigieren der Interpolationswerte kein weiteres Messsystem, wie etwa ein Laserinterferometer oder ein Induktivtaster, benötigt wird. Die Korrekturwerte lassen sich durch einfaches Verfahren des Kopfes ermitteln.

Darüber hinaus benötigen die neue Maschine und das neue Verfahren keine A/D-Wandler zum Konvertieren der analogen, Sensorsignale. Das neue Verfahren ist daher auch bei Koordinatenmessgeräten einsetzbar, die schaltende Tastköpfe verwenden. Außerdem eignet sich das neue Verfahren auch für digitale Messsysteme und es werden Interpolationsfehler unabhängig von ihrer Ursache korrigiert. Beispielsweise werden mit Hilfe des neuen Verfahrens auch Interpolationsfehler korrigiert, die nicht Amplitudenlage, Phasenlage und/oder Offset der analogen Messsignale zurückzuführen sind.

Schließlich besitzt das neue Verfahren den Vorteil, dass die Fehlerkurve zum Korrigieren der Interpolationswerte auch im laufenden Messbetrieb automatisch ermittelt und ständig angepasst werden kann. Daher ist es möglich, die Bestimmung der Korrekturwerte "online" während der Benutzung des Koordinatenmessgerätes durchzuführen und stetig zu wiederholen. Veränderungen im Betriebsablauf, wie z.B. eine Verformung der Maßverkörperung unter Last, werden daher zeitnah- berücksichtigt.

Durch den Verzicht auf zusätzliche Messsysteme und/oder A/D-Wandler lässt sich das neue Verfahren sehr kostengünstig implementieren. Die genannte Aufgabe ist daher vollständig gelöst.

In einer bevorzugten Ausgestaltung der Erfindung wird der Positionsverlauf gefiltert, um den periodischen Anteil zu bestimmen. Vorzugsweise wird der Kopf der Maschine dabei langsam und kontinuierlich verfahren.

Zur Filterung kann ein Hoch- oder Bandpassfilter eingesetzt werden, das darauf abgestimmt ist, Frequenzen, die der periodischen Teilung der Maßverkörperung entsprechen, durchzulassen. Es können hier sowohl analoge als auch digitale Filter verwendet werden. Ein digitales Filter kann sehr einfach mit Hilfe eines Software-Algorithmus realisiert werden, der auf dem ohnehin vorhandenen Prozessor der Auswerte- und Steuereinheit abläuft. Diese Ausgestaltung ermittelt die Interpolationsfehler direkt aus dem Positionsverlauf, und sie ist daher besonders bevorzugt bei Koordinatenmessgeräten, die kein Schleppabstandssignal liefern.

In einer weiteren bevorzugten Ausgestaltung wird beim Verfahren des Kopfes ein Schleppsignal (vorzugsweise der Schleppabstand für den Lageregler) erzeugt, welches eine Differenz zwischen einer Sollposition und einer Istposition des Kopfes repräsentiert, und der periodische Anteil wird anhand des Schleppsignals bestimmt.

Ein Schleppsignal und insbesondere der Schleppabstand eignen sich besonders für das neue Verfahren, da die globale Positionsveränderung bereits eliminiert ist und der periodische Signalanteil folglich relativ stark hervortritt. Er kann daher besonders einfach ermittelt werden. Darüber hinaus liegt der Schleppabstand häufig schon als Signal vor. Diese Ausgestaltung lässt sich daher besonders einfach und kostengünstig realisieren.

In einer weiteren Ausgestaltung werden die Korrekturwerte in einer sequentiellen Korrekturwerttabelle abgespeichert, wobei jedem Interpolationswert genau ein Tabellenplatz in der sequentiellen Korrekturwerttabelle zugeordnet ist.

Eine sequentielle Korrekturwerttabelle eignet sich besonders gut für die Realisierung des neuen Verfahrens, weil die Ordnung der Tabelle sehr einfach an die Positionen des Kopfes angepasst werden kann. Die Korrekturwerte für eine bestimmte Kopfposition lassen sich dann sehr schnell auffinden.

In einer weiteren Ausgestaltung ist jedem Interpolationswert derjenige Tabellenplatz zugeordnet, der sich aus den Positionsdaten des Kopfes unter Verwendung einer Modulo-N-Operation ergibt, wobei N die Anzahl der Korrekturwerte in der sequentiellen Korrekturwerttabelle ist.

Diese Ausgestaltung ermöglicht einen besonders schnellen Zugriff auf die Korrekturwerte in der Tabelle. Darüber hinaus macht sich diese Ausgestaltung die Periodizität des Fehlerverlaufs zu Nutze. Es genügt, die Korrekturwerte für eine Fehlerperiode zu ermitteln und in der sequentiellen Tabelle abzuspeichern. Der Zugriff auf den jeweils richtigen Korrekturwert ist mit der Modulo-N-Operation sehr einfach und schnell möglich.

In einer weiteren Ausgestaltung der Erfindung werden die Korrekturwerte in der Korrekturwerttabelle iterativ bestimmt. Besonders bevorzugt ist es dabei, wenn die Korrekturwerte unter Verwendung einer digitalen Glättung (filterung) bestimmt werden, wozu beispielsweise folgende Beziehung verwendet werden kann:

$$K_i = K_{i-1} + F \cdot (K_i - K_{i-1}).$$

Dabei bezeichnet $K_I$ den Korrekturwert im i-ten Iterationsschritt, $K_{i-1}$ bezeichnet den vorhergehenden Iterationsschritt und F bezeichnet einen Gewichtungsfaktor mit 0 < F < 1.

Wie im Folgenden bei der Beschreibung von bevorzugten Ausführungsbeispielen erläutert ist, ermöglicht diese Ausgestaltung eine besonders einfache Ermittlung der Korrekturwerte. Dabei stellt diese Ausgestaltung geringe Anforderungen an die Leistungsfähigkeit des verwendeten Prozessors.

In einer weiteren Ausgestaltung werden die Korrekturwerte der Korrekturwerttabelle in zufälliger zeitlicher Abfolge bestimmt, und zwar so lange, bis eine definierte Anzahl an Korrekturwerten bestimmt ist.

Diese Ausgestaltung stellt eine besonders einfache Implementierung der Erfindung dar, und sie ist besonders vorteilhaft bei modernen Koordinatenmessgeräten, die innerhalb kürzester Zeit eine Vielzahl von Positionen anfahren. Zudem ist diese Ausgestaltung besonders geeignet, wenn die Bestimmung der Korrekturwerte online im Messbetrieb erfolgen soll.

In einer weiteren Ausgestaltung werden zwei Korrekturwerttabellen bereitgestellt, wobei eine erste Korrekturwerttabelle zum Bestimmen der Korrekturwerte verwendet wird, während eine zweite Korrekturwerttabelle zum Korrigieren der Interpolationswerte verwendet wird, wobei die Korrekturwerte aus der ersten Korrekturwerttabelle in die Tabellenplätze der zweiten Korrekturwerttabelle übertragen werden.

Auch diese Ausgestaltung ist besonders vorteilhaft, wenn die Ermittlung der Korrekturwerte online im Messbetrieb des Koordinatenmessgerätes erfolgen soll. Die Verwendung von zwei Korrekturwerttabellen ermöglicht es, die eigentliche Messung durchzuführen, ohne dass sie durch die Ermittlung der Korrekturwerte beeinflusst wird. Andererseits lassen sich die Verfahrbewegungen des Kopfes im Messbetrieb sehr gut verwenden, um Korrekturwerte gemäß der vorliegenden Erfindung zu bestimmen.

In einer weiteren Ausgestaltung werden die Korrekturwerte anhand eines definierten periodischen Korrekturwertverlaufs bestimmt, der in Bezug auf Phasenlage, Amplitude und Offset an den periodischen Anteil angeglichen wird. In einer besonders bevorzugten Ausgestaltung wird als periodischer Korrekturwertverlauf ein Sinusverlauf verwendet. In anderen bevorzugten Ausgestaltungen können jedoch auch periodische Funktionen mit mehr Freiheitsgraden verwendet werden.

Diese Ausgestaltung beruht darauf, dass bereits im Vorhinein bekannt ist, dass der Verlauf der Korrekturwerte periodisch sein muss, um den periodischen Anteil im Positionsverlauf des Kopfes zu reduzieren. Die vorliegende Ausgestaltung geht daher von einem periodischen Korrekturwertverlauf aus, der lediglich in Bezug auf seine Parameter an den tatsächlichen periodischen Anteil angepasst werden muss. Die Anpassung kann beispielsweise nach der Methode der kleinsten Quadrate, aber auch nach einem anderen Anpassungsalgorithmus erfolgen. Die Ausgestaltung ist besonders dann von Vorteil, wenn relativ viele Korrekturwerte bestimmt werden müssen, da die Zeit für die Bestimmung der Korrekturwerte hier weitgehend unabhängig von der Anzahl der zu bestimmenden Korrekturwerte ist.

Ausführungsbeispiele der Erfindung sind in der Zeichnung dargestellt und werden in der nachfolgenden Beschreibung näher erläutert. Es zeigen:

Fig. 1     eine schematische Darstellung eines Ausführungsbeispiels des neuen Koordinatenmessgerätes,

Fig. 2     den Verlauf des Schleppabstandes bei dem Koordinatenmessgerät aus Fig. 1, wenn die Interpolationswerte nicht in der erfindungsgemäßen Weise korrigiert werden,

Fig. 3     den Verlauf des Schleppabstandes, wenn die Interpolationswerte in der erfindungsgemäßen Weise korrigiert werden,

Fig. 4     ein vereinfachtes Flussdiagramm zur Erläuterung eines ersten Ausführungsbeispiels des neuen Verfahrens, und

Fig. 5     ein vereinfachtes Flussdiagramm zur Erläuterung eines zweiten Ausführungsbeispiels des neuen Verfahrens.

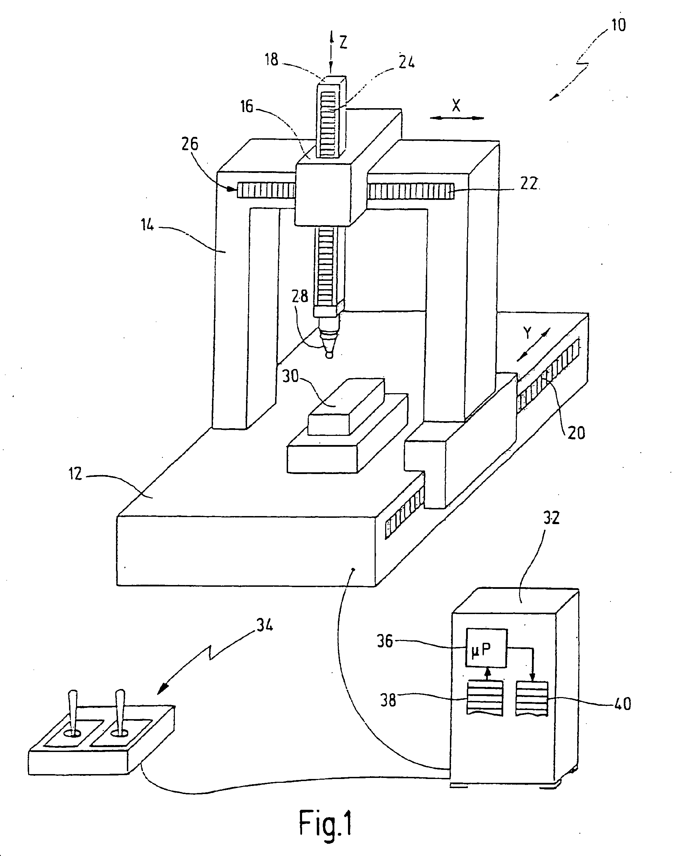

In Fig. 1 ist ein Koordinatenmessgerät als Ausführungsbeispiel der neuen maschine in seiner Gesamtheit mit der Bezugsziffer 10 bezeichnet. Das Koordinatenmessgerät 10 ist hier in Portalbauweise dargestellt. Die Erfindung ist hierauf jedoch nicht beschränkt und kann ebenso bei Koordinatenmessgeräten angewendet werden, die einen anderen kinematischen Aufbau haben, beispielsweise bei Horizontalarmmessgeräten. Darüber hinaus ist die Erfindung nicht auf Koordinatenmessgeräte. Sie kann ebenso bei Werkzeugmaschinen und anderen Maschinen eingesetzt werden.

Das Koordinatenmessgerät 10 besitzt eine Basis 12, auf der ein Portal 14 in Längsrichtung verschieblich angeordnet ist. Die Verschieberichtung des Portals 14 wird üblicherweise als Y-Achse bezeichnet. Am oberen Querträger des Portals 14 ist ein Schlitten 16 angeordnet, der in X-Richtung verschieblich ist. Am Schlitten 16 ist eine Pinole 18 angeordnet, die in Z-Richtung verschieblich ist. Mit den Bezugsziffern 20, 22, 24 sind Maßstäbe bezeichnet, die jeweils eine periodische Teilung 26 aufweisen. Bei den Maßstäben 20, 22, 24 handelt es sich beispielsweise um Glasmaßstäbe, die jeweils mit einem optischen Sensor abgetastet werden, der zwei um 90° phasenverschobene Sinussignale liefert. Derartige Maßstäbe und Sensoren werden bei Koordinatenmessgeräten häufig eingesetzt. Die Erfindung ist hierauf jedoch nicht beschränkt und kann auch bei anderen Maßverkörperungen mit periodischer Teilung eingesetzt werden.

Mit der Bezugsziffer 28 ist ein Kopf bezeichnet, der am unteren freien Ende der Pinole 18 angeordnet ist. Mit Hilfe des Kopfes wird ein Messobjekt 30 angetastet, und aus der Stellung des Kopfes 28 im Messvolumen kann die Raumkoordinate des Messpunktes bestimmt werden.

Bei der Bezugsziffer 32 ist eine schematisch dargestellte Auswerte- und Steuereinheit bezeichnet, die die Verfahrbewegungen des Kopfes 28 steuert und außerdem die Raumkoordinaten des angetasteten Messpunktes berechnet. Dazu wertet sie die Signale der Sensoren aus, die die Maßstäbe 20, 22, 24 abtasten.

Die Steuerung des Kopfes 28 kann bei diesem Koordinatenmessgerät 10 auch von Hand erfolgen, und zwar über ein Bedienpult 34, das mit der Steuer- und Auswerteeinheit 32 verbunden ist. Die Steuer- und Auswerteeinheit 32 beinhaltet einen Prozessor 36, zumindest einen ersten Speicher 38 und einen zweiten Speicher 40. Im Speicher 38 sind Korrekturwerte in einer sequenziellen Tabelle abgespeichert. Der Prozessor 36 verwendet die Korrekturwerte aus dem Speicher 38, um die Raumkoordinaten des angetasteten Messpunktes zu bestimmen. Dabei dienen die Korrekturwerte aus dem Speicher 38 zum Korrigieren von Interpolationswerten, die der Prozessor 36 in an sich bekannter Weise aus den Signalen der Positionssensoren bestimmt.

Die im Speicher 40 abgelegte Tabelle wird gemäß einem bevorzugten Ausführungsbeispiel der Erfindung dazu verwendet, die Korrekturwerte online während des Messbetriebes jeweils neu zu bestimmen.

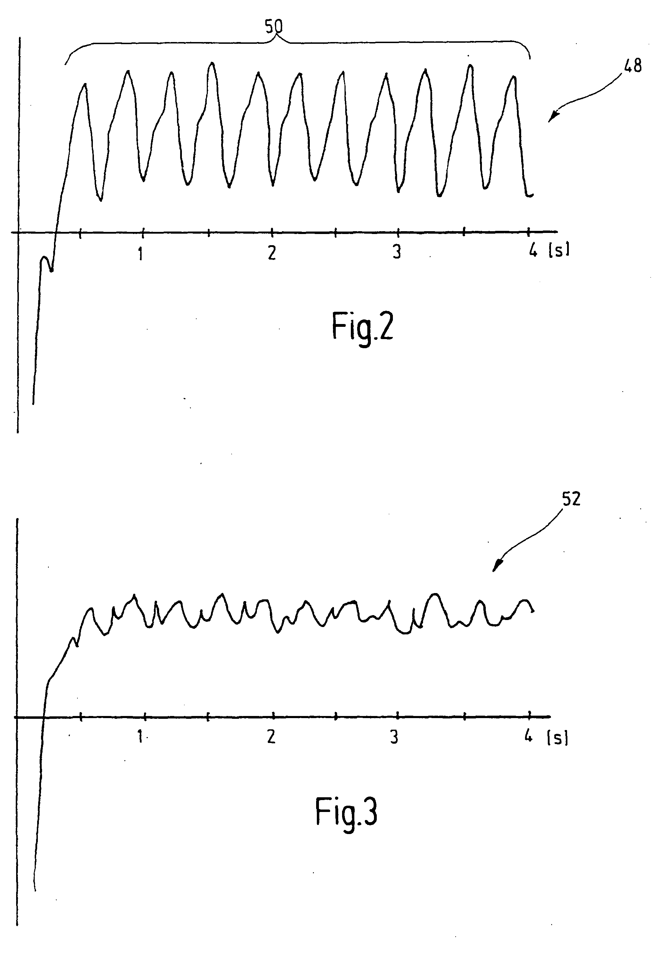

In Fig. 2 ist ein Signalverlauf 48 dargestellt, der den Verlauf des Schleppabstandes repräsentiert, der sich ergibt, wenn der Kopf 28 entlang einer Koordinatenachse verfahren wird, ohne dass die Interpolationsfehler in der erfindungsgemäßen Weise korrigiert werden. Anstelle des Schleppabstandes, der für die Steuerung des Kopfes 28 dem Lageregler (hier nicht dargestellt) zugeführt ist, könnte auch ein anderes Signal verwendet werden, das den Schleppabstand repräsentiert. Darüber hinaus kann die Erfindung auch realisiert werden, wenn man den Positionsverlauf des Kopfes 28 direkt auswertet.

Wie in Fig. 2 gut zu sehen ist, weist der Schleppabstand 48 einen periodischen Signalanteil 50 auf. Der Signalanteil 50 besitzt eine Periode, die in etwa der periodischen Teilung 26 des zugehörigen Maßstabes entspricht.

Fig. 3 zeigt den Signalverlauf entsprechend Fig. 2, wobei hier jedoch das erfindungsgemäße Verfahren zur Korrektur von Interpolationsfehlern verwendet wurde. Wie man leicht erkennen kann, ist der periodische Anteil praktisch eliminiert. Der Schleppabstand 52 besitzt lediglich geringe, statistische Schwankungen, was auf Rauschen, Gleichlaufschwankungen und andere statistische Effekte zurückzuführen ist.

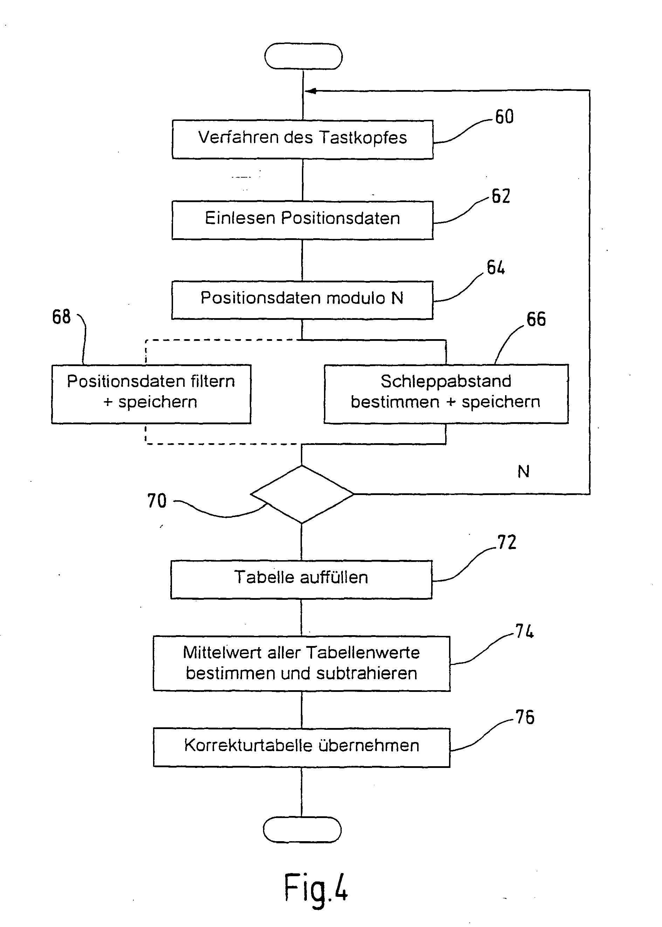

Fig. 4 zeigt an Hand eines vereinfachten Flussdiagramms ein erstes Ausführungsbeispiel des neuen Verfahrens. Gemäß Schritt 60 wird der Kopf an eine Raumposition verfahren. Anschließend werden die Positionsdaten, die zu dieser Raumposition gehören, mit Hilfe der Maßstäbe 20, 22, 24 und der zugehörigen Sensoren bestimmt. Im Schritt 64 werden die erhaltenen Positionsdaten einer Modulo-N-Operation unterzogen. Dabei bezeichnet N die Anzahl der Korrekturwerte und damit die Anzahl der Interpolationswerte, mit der eine Periode der periodischen Teilung weiter unterteilt wird. Bei einem Maßstab mit einem Gitter- bzw. Strichabstand von 16 μm bietet es sich beispielsweise an, 160 Interpolationswerte zu berechnen. Dementsprechend werden auch 160 Korrekturwerte benötigt, die in einer sequentiellen Tabelle mit 160 Tabellenfeldern abgespeichert werden. Damit erhält das Messsystem eine Auflösung von 0,1 μm und es steht für jeden 0,1-μm-Schritt ein Korrekturwert zur Verfügung.

Bei einem Koordinatenmessgerät mit dem obigen Maßstab werden die erhaltenen Positionsdaten also einer Modulo-160-Operation unterzogen. Wenn die Position des Kopfes in einer Koordinatenrichtung beispielsweise 80,0042 mm (= 800.042 x 0,1 μm) beträgt, lautet die Rechenoperation 800042 Modulo 160 = 42. Die Modulo-Operation zeigt damit auf den Tabellenplatz 42, an dem sich der Korrekturwert für die entsprechende Kopfposition befindet.

Gemäß Schritt 66 wird nun der Schleppabstand für den Zeitpunkt bestimmt, an dem sich der Kopf 28 an der genannten Position befindet. Dieser Schleppabstandswert wird an der Tabellenposition abgespeichert, die im Schritt 64 mit Hilfe des Modulo-Operators bestimmt wurde, im angenommenen Beispiel also an der Tabellenposition 42.

Alternativ hierzu kann anstelle des Schleppabstandes auch der globale Positionsverlauf verwendet werden, um die Tabellenplätze in der Korrekturwerttabelle im Speicher des Koordinatenmessgerätes 10 zu füllen. Dazu ist es allerdings erforderlich, den Positionsverlauf mit einem Hoch- oder Bandpass zu filtern, der darauf abgestimmt ist, periodische Signale mit einer Periode durchzulassen, die in etwa der periodischen Teilung der Maßstäbe 20, 22, 24 entsprechen. Anschließend wird der gefilterte Positionswert an dem in Schritt 64 bestimmten Tabellenplatz abgespeichert.

Grundsätzlich ist es auch möglich, die Schritte 66 und 68 beide auszuführen, um beispielsweise die erhaltenen Korrekturwerte abzugleichen. Bevorzugt ist jedoch aus derzeitiger Sicht, wenn lediglich der Schleppabstand ausgewertet wird.

Gemäß Schritt 70 erfolgt eine Abfrage, ob bereits alle Tabellenplätze (oder eine definierte Anzahl an Tabellenplätzen) mit Korrekturwerten belegt sind. Ist dies nicht der Fall, kehrt das Verfahren zum Schritt 60 zurück und es wird ein neuer Tabellenwert in der beschriebenen Weise eingelesen.

Für den Fall, dass die Modulo-Operation im Schritt 64 einen Tabellenplatz ergibt, der bereits mit einem Schleppabstandswert und/oder Positionswert belegt ist, wird der neue Tabellenwert vorzugsweise nach folgender Formel berechnet:

$$K_i = K_{i-1} + F \cdot (K_i - K_{i-1}).$$

Dabei bezeichnet $K_i$ den Korrektur- oder Tabellenwert im i-ten Iterationsschritt und $K_{i-1}$ den Korrektur- oder Tabellenwert im vorhergehenden Iterationsschritt. Mit F ist ein Gewichtungsfaktor bezeichnet, der zwischen 0 und 1 liegen kann. Bei einer solchen Aktualisierung der Tabellenwerte werden statistische Schwankungen im Schleppabstand bzw. bei den Positionsdaten eliminiert.

Wenn die Iterationsläufe im Schritt 70 beendet werden, bevor sämtliche Tabellenpositionen in der Tabelle mit Schleppabstands- bzw. Positionsdaten belegt sind, kann die Tabelle gemäß Schritt 62 durch Einfügen von interpolierten Tabellenwerten aufgefüllt werden. Alternativ hierzu ist es jedoch auch möglich, das Verfahren so lange durchzuführen, bis sämtliche Tabellenplätze "messtechnisch" belegt sind.

Im Schritt 74 wird als nächstes ein Mittelwert aller Tabellenwerte bestimmt. Anschließend wird der erhaltene Mittelwert von allen Tabellenwerten subtrahiert. Auf diese Weise wird ein Offset in den Tabellenwerten eliminiert und es verbleibt ein periodisches Korrektursignal, wobei jeder Tabellenwert einen Korrekturwert darstellt.

Werden diese Korrekturwerte - wiederum unter Verwendung der Modulo-N-Operation - für jede Kopfposition ausgewählt und von den zunächst bestimmten Positionsdaten subtrahiert, wird der periodische Anteil im Positionsverlauf eliminiert. Die Genauigkeit der Positionsmesswerte wird dadurch erhöht.

Bei dem Verfahren gemäß Fig. 4 kann die Korrekturwerttabelle anfänglich "leer" sein. Die Schritte 60 bis 70 werden dann iterativ durchlaufen, bis die Korrekturwerttabelle hinreichend gefüllt ist. Alternativ hierzu kann jedoch auch eine "alte" Tabelle aus einer früheren Anwendung des Verfahrens verwendet werden. In einem bevorzugten Ausführungsbeispiel werden die Korrekturwerte der Tabelle nach Einschalten der Steuer- und Auswerteeinheit 32 jeweils neu bestimmt.

Das Verfahren gemäß Fig. 4 eignet sich zum Befüllen der Korrekturwerttabelle, weil die sich in einem Tastzyklus ergebende Kopfposition und der sich nach der Modulo-Operation ergebende Tabellenplatz nicht vorhersehbar sind. Bei den hohen Abtastraten und Messgeschwindigkeiten moderner Koordinatenmessgeräte füllt sich die Korrekturwerttabelle sehr schnell. Verbleibende "Löcher" können gemäß Schritt 72 durch Einfügen von interpolierten Tabellenwerten aufgefüllt werden.

Gemäß einem besonders bevorzugten Ausführungsbeispiel wird eine "Update-Tabelle" 40 im Messbetrieb des Koordinatenmessgerätes 10 ständig neu erzeugt. In gewissen Zeitabständen wird die Update-Tabelle dann in den Speicher 38 übernommen (Schritt 76) und von dort zur Korrektur der Positionsdaten verwendet. Nach der Übernahme der Update-Tabelle in den Speicher 38 wird eine neue Update-Tabelle nach dem Verfahren in Fig. 4 erstellt.

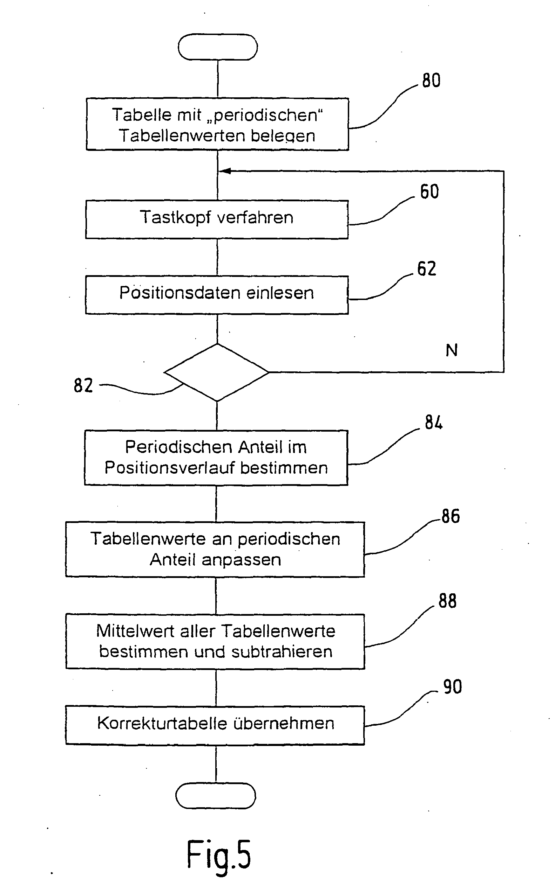

Fig. 5 zeigt ein weiteres Ausführungsbeispiel des neuen Verfahrens. In diesem Fall wird eine Korrekturwerttabelle zunächst mit "periodischen" Tabellenwerten belegt (Schritt 80), d.h. mit Tabellenwerten, die eine Periode eines periodischen Verlaufs repräsentieren. Beispielsweise kann es sich hier um einen sinusförmigen Verlauf handeln.

Gemäß den Schritten 60, 62 wird dann der Kopf 28 entlang einer Bewegungsbahn verfahren und es werden die Positionsdaten des Kopfes 28 eingelesen. Das Verfahren des Kopfes erfolgt so lange, bis die vorgesehene Bewegungsbahn durchlaufen ist (Schritt 82).

Im Schritt 84 wird der aufgenommene Positionsverlauf analysiert und es wird nach einem periodischen Anteil gesucht, dessen Periode in etwa der periodischen Teilung des zugehörigen Maßstabes entspricht. Der periodische Anteil lässt sich beispielsweise mit Hilfe eines Filters oder auch mit Hilfe einer Fast-Fourier-Transformation (FFT) ermitteln.

Anschließend werden gemäß Schritt 86 die anfänglich angenommenen Tabellenwerte an den periodischen Anteil angepasst. Die Anpassung erfolgt beispielsweise nach der Methode der kleinsten Quadrate. Ziel des Ganzen ist es, die Phasenlage, die Amplitude und den Offset der "periodischen" Tabellenwerte an den tatsächlichen periodischen Anteil anzupassen.

Sobald diese Anpassung abgeschlossen ist, wird gemäß Schritt 88 wieder der Mittelwert aller Tabellenwerte bestimmt und von allen Tabellenwerten subtrahiert. Anschließend kann gemäß Schritt 90 die Übernahme der Korrekturwerttabelle zum Korrigieren von interpolierten Positionsdaten erfolgen.

**Patentansprüche**

1. Verfahren zum Korrigieren von Interpolationsfehlern einer Maschine, insbesondere eines Koordinatenmessgerätes (10), die einen verfahrbaren Kopf (28) und eine Positionsmesseinrichtung zum Bestimmen von Verfahrpositionen des Kopfes (28) besitzt, wobei die Positionsmesseinrichtung eine Maßverkörperung (20, 22, 24) mit einer periodischen Teilung (26) beinhaltet, und wobei zum Bestimmen der Verfahrpositionen Interpolationswerte verwendet werden, die die periodische Teilung (26) weiter unterteilen, mit den Schritten:

   - Verfahren (60) des Kopfes (28) an eine Vielzahl von Positionen,
   - Bestimmen (62) einer Vielzahl von Positionsdaten, die den Positionen des Kopfes (28) entsprechen, mit Hilfe der Positionsmesseinrichtung, wobei die Vielzahl der Positionsdaten einen Positionsverlauf (48) repräsentieren,
   - Bestimmen eines periodischen Anteils (50) in dem Positionsverlauf (48) mit einer Periode, die in etwa der periodischen Teilung (26) der Maßverkörperung entspricht, und
   - Bestimmen von Korrekturwerten (64-74; 84-88) zum Korrigieren der Interpolationswerte derart, dass der periodische Anteil (50) zumindest reduziert wird.

2. Verfahren nach Anspruch 1, **dadurch gekennzeichnet, dass** der Positionsverlauf (48) gefiltert wird (68), um den periodischen Anteil (50) zu bestimmen.

3. Verfahren nach Anspruch 1 oder 2, **dadurch gekennzeichnet, dass** beim Verfahren des Kopfes (28) ein Schleppsignal erzeugt wird, das eine Differenz zwischen einer Sollposition und einer Istposition des Kopfes (28) repräsentiert, und dass der periodische Anteil (50) anhand des Schleppsignals bestimmt wird.

4. Verfahren nach einem der Ansprüche 1 bis 3, **dadurch gekennzeichnet, dass** die Korrekturwerte in einer sequentiel-len Korrekturwerttabelle (38, 40) abgespeichert werden, wobei jedem Interpolationswert genau ein Tabellenplatz in der sequentiellen Korrekturwerttabelle (38, 40) zugeordnet wird.

5. Verfahren nach Anspruch 4, **dadurch gekennzeichnet, dass** jedem Interpolationswert derjenige Tabellenplatz zugeordnet wird (64), der sich aus den Positionsdaten des Kopfes (28) unter Verwendung einer Modulo-N-Operation ergibt, wobei N die Anzahl der Korrekturwerte in der sequentiellen Korrekturwerttabelle ist.

6. Verfahren nach Anspruch 4 oder 5, **dadurch gekennzeichnet, dass** die Korrekturwerte der Korrekturwerttabelle iterativ bestimmt werden (64-74).

7. Verfahren nach einem der Ansprüche 4 bis 6, **dadurch gekennzeichnet, dass** die Korrekturwerte der Korrekturwerttabelle (38, 40) in zufälliger zeitlicher Abfolge bestimmt werden, bis eine definierte Anzahl an Korrekturwerten bestimmt ist (70).

8. Verfahren nach einem der Ansprüche 4 bis 7, **dadurch gekennzeichnet, dass** zwei Korrekturwerttabellen (38, 40) bereitgestellt werden, wobei eine erste Korrekturwerttabelle (40) zum Bestimmen der Korrekturwerte verwendet wird, während eine zweite Korrekturwerttabelle (38) zum Korrigieren der Interpolationswerte verwendet wird, und wobei die Korrekturwerte aus der ersten Korrekturwerttabelle (40) in die Tabellenplätze der zweiten Korrekturwerttabelle (38) übertragen werden.

9. Verfahren nach einem der Ansprüche 1 bis 8, **dadurch gekennzeichnet, dass** die Korrekturwerte anhand eines definierten periodischen Korrekturwertverlaufs bestimmt werden, der in Bezug auf Phasenlage, Amplitude und Offset an den periodischen Anteil angeglichen wird (80-86).

10. Computerprogrammprodukt mit Programmcode, der dazu ausgebildet ist, ein Verfahren nach einem der Ansprüche 1 bis 9 auszuführen, wenn der Programmcode auf einem Computer ausgeführt wird.

11. Maschine, insbesondere Koordinatenmessgerät, mit einem verfahrbaren Kopf (28), mit einer Positionsmesseinrichtung zum Bestimmen von Verfahrpositionen des Kopfes, wobei die Positionsmesseinrichtung eine Maßverkörperung (20, 22, 24) mit einer periodischen Teilung (26) beinhaltet, mit einem Prozessor (36) zum Bestimmen von Interpolationswerten, die die periodische Teilung weiter unterteilen, und mit einer Einheit (36-40) zum Bestimmen von Korrekturwerten zum Korrigieren der Interpolationswerte, wobei die Einheit einen ersten Teil (60, 62) aufweist, der dazu ausgebildet ist, einen Positionsverlauf mit einer Vielzahl von Positionsdaten aufzunehmen, die wechselnden Positionen des Kopfes (28) entsprechen, wobei die Einheit ferner einen zweiten Teil (66-74; 84) aufweist, der dazu ausgebildet ist, einen periodischen Anteil (50) in dem Positionsverlauf mit einer Periode zu bestimmen, die in etwa der periodischen Teilung (26) der Maßverkörperung (20, 22, 24) entspricht, und wobei die Einheit einen dritten Teil (76, 90) aufweist, der dazu ausgebildet ist, die Korrekturwerte derart zu bestimmen, dass der periodische Anteil (26) zumindest reduziert wird.

**Claims**

1. A method for correcting interpolation errors of a machine, in particular a coordinate measuring machine (10), the machine having a mobile head (28) and a position measurement device for determining movement positions of the head (28), wherein the position measurement device includes a material measure (20, 22, 24) with a periodic division (26), and wherein interpolation values which further subdivide the periodic division (26) are used for determining the movement positions, the method comprising the steps:

   - moving (60) the head (28) to a plurality of positions,
   - determining (62) a plurality of position data corresponding to the positions of the head (28) by means of the position measurement device, wherein the plurality of position data represents a position curve (48),
   - determining a periodic component (50) in the position curve (48), said periodic component having a period which approximately corresponds to the periodic division (26) of the material measure, and

- determining correction values (64-74, 84-88) for correcting the interpolation values such that the periodic component (50) is at least reduced.

2. The method of claim 1, **characterized in that** the position curve (48) is filtered (68) in order to determine the periodic component (5).

3. The method of claim 1 or 2, **characterized in that** a drag signal is generated when the head (28) moves, said drag signal representing a difference between a set position and an actual position of the head (28), and the periodic component (50) is determined on the basis of the drag signal.

4. The method of one of claims 1 to 3, **characterized in that** the correction values are stored in a sequential correction value table (38, 40), with each interpolation value being assigned exactly one table cell in the sequential correction value table (38, 40).

5. The method of claim 4, **characterized in that** each interpolation value is assigned (64) that table cell which is derived from the position data of the head (28) using a modulo N operation, with N being the number of correction values in the sequential correction value table.

6. The method of claim 4 or 5, **characterized in that** the correction values of the correction value table are iteratively determined (64-74).

7. The method of one of claims 4 to 6, **characterized in that** the correction values of the correction value table (38, 40) are determined in random chronological sequence until a defined number of correction values has been determined (70).

8. The method of one of claims 4 to 7, **characterized in that** two correction value tables (38, 40) are provided, wherein a first correction value table (40) is used for determining the correction values while a second correction value table (38) is used for correcting the interpolation values, and wherein the correction values from the first correction value table (40) are transferred into the table cells of the second correction value table (38).

9. The method of one of claims 1 to 8, **characterized in that** the correction values are determined on the basis of a defined periodic correction value curve which
is adapted (80-86) to the periodic component with respect to phase, amplitude and offset.

10. A computer program product including program code which is designed for executing a method of one of claims 1 to 9 when the program code is executed on a computer.

11. A machine, in particular a coordinate measuring machine, comprising a mobile head (28), comprising a position measurement device for determining movement positions of the head, with the position measurement device having a material measure (20, 22, 24) with a periodic division (26), comprising a processor (36) for determining interpolation values which further subdivide the periodic division, and comprising a unit (36-40) for determining correction values for correcting the interpolation values, wherein the unit comprises a first part (60, 62) designed for recording a position curve having a plurality of position data which corresponds to the changing positions of the head (28), wherein the unit further comprises a second part (66-74; 84) designed for determining a periodic component (50) in the position curve, the periodic component having a period which approximately corresponds to the periodic division (26) of the material measure (20, 22, 24), and wherein the unit comprises a third part (76, 90) designed for determining the correction values such that the periodic component (26) is at least reduced.

**Revendications**

1. Procédé de correction des erreurs d'interpolation d'une machine, en particulier d'un appareil (10) de mesure de coordonnées,
la machine possédant une tête déplaçable (28) et un dispositif de mesure de position qui détermine les positions de déplacement de la tête (28),
le dispositif de mesure de position contenant un organe de mesure (20, 22, 24) doté d'une division périodique (26) et des valeurs d'interpolation qui divisent davantage la division périodique (26) étant utilisées pour déterminer les positions de déplacement,

le procédé comportant les étapes qui consistent à:

- déplacer (60) la tête (28) en plusieurs positions,
- à l'aide du dispositif de mesure de position, déterminer (62) plusieurs données de positions qui correspondent aux positions de la tête (28), les différentes données de positions représentant une évolution (48) de la position,
- déterminer une partie périodique (50) de l'évolution (48) de la position dont la période correspond sensiblement à la division périodique (26) de l'organe de mesure et
- déterminer des valeurs de correction (64-74; 84-88) qui corrigent les valeurs d'interpolation de telle sorte que la partie périodique (50) soit au moins réduite.

2. Procédé selon la revendication 1, **caractérisé en ce que** l'évolution de position (48) est filtrée (68) pour déterminer la partie périodique (50).

3. Procédé selon les revendications 1 ou 2, **caractérisé en ce que** un signal de traînée qui représente la différence entre une position de consigne et une position effective de la tête (28) est formé lorsque la tête (28) est déplacée et **en ce que** la partie périodique (50) est déterminée à l'aide du signal de traînée.

4. Procédé selon l'une des revendications 1 à 3, **caractérisé en ce que** les valeurs de correction sont conservées en mémoire dans un tableau (38, 40) de valeurs de correction successives, un unique emplacement du tableau (38, 40) de valeurs de correction successives étant associé à chaque valeur d'interpolation.

5. Procédé selon la revendication 4, **caractérisé en ce que** l'emplacement du tableau qui résulte des données de position de la tête (28) par recours à une opération modulo N dans laquelle N représente le nombre des valeurs de correction du tableau de valeurs de correction successives est associé (64) à chaque valeur d'interpolation.

6. Procédé selon les revendications 4 ou 5, **caractérisé en ce que** les valeurs de correction du tableau des valeurs de correction sont déterminées (64-74) par voie itérative.

7. Procédé selon l'une des revendications 4 à 6, **caractérisé en ce que** les valeurs de correction du tableau (38, 40) de valeurs de correction sont déterminées dans une succession temporelle aléatoire jusqu'à ce qu'un nombre défini de valeurs de correction soit déterminé (70).

8. Procédé selon l'une des revendications 4 à 7, **caractérisé en ce que** deux tableaux (38, 40) de valeurs de correction sont préparés, un premier tableau (40) de valeurs de correction étant utilisé pour déterminer les valeurs de correction tandis qu'un deuxième tableau (38) de valeurs de correction est utilisé pour corriger les valeurs d'interpolation, les valeurs de correction provenant du premier tableau (40) de valeurs de correction étant transférées dans les emplacements du deuxième tableau (38) de valeurs de correction.

9. Procédé selon l'une des revendications 1 à 8, **caractérisé en ce que** les valeurs de correction sont déterminées à l'aide d'une courbe périodique définie de valeurs de correction, courbe dont la phase, l'amplitude et le décalage sont adaptés à la partie périodique (80-86).

10. Produit de programme informatique doté d'un code de programme configuré pour exécuter un procédé selon l'une des revendications 1 à 9 lorsque le code de programme est exécuté sur un ordinateur.

11. Machine, et en particulier appareil de mesure de coordonnées, dotée d'une tête déplaçable (28),
d'un dispositif de mesure de position de destiné à déterminer des positions de déplacement de la tête, le dispositif de mesure de position contenant un organe de mesure (20, 22, 24) doté d'une division périodique (26),
d'un processeur (36) qui détermine des valeurs d'interpolation qui divisent davantage la division périodique et
d'une unité (36-40) de détermination de valeurs de correction destinée à corriger les valeurs d'interpolation,
l'unité présentant une première partie (60, 62) configurée pour enregistrer une courbe de position qui présente plusieurs données de position qui correspondent à des positions changeantes de la tête (28),
l'unité présentant en outre une deuxième partie (66-74; 84) configurée pour déterminer une partie périodique (50) de la courbe de position, la période de la partie périodique correspondant sensiblement à la division périodique (26) de l'organe de mesure (20, 22, 24) et
l'unité présentant une troisième partie (76, 90) configurée pour déterminer les valeurs de correction de telle sorte que la partie périodique (26) soit au moins réduite.

Fig.1

Fig.2

Fig.3

```
                    ┌──────┐
                    │      │
                    └──────┘
                       │
         ┌─────────────────────────┐   ─60
         │  Verfahren des Tastkopfes │
         └─────────────────────────┘
                       │
         ┌─────────────────────────┐   ─62
         │  Einlesen Positionsdaten  │
         └─────────────────────────┘
                       │
         ┌─────────────────────────┐   ─64
         │  Positionsdaten modulo N  │
         └─────────────────────────┘
   68                  │                 66
┌──────────────────┐       ┌──────────────────────┐
│ Positionsdaten    │       │   Schleppabstand       │
│ filtern           │       │   bestimmen + speichern │
│ + speichern       │       └──────────────────────┘
└──────────────────┘
                       │
   70                ◇                    N
                       │
         ┌─────────────────────────┐   ─72
         │     Tabelle auffüllen      │
         └─────────────────────────┘
                       │
         ┌─────────────────────────┐   ─74
         │ Mittelwert aller Tabellenwerte │
         │ bestimmen und subtrahieren │
         └─────────────────────────┘
                       │
         ┌─────────────────────────┐   ─76
         │ Korrekturtabelle übernehmen │
         └─────────────────────────┘
                       │
                    ┌──────┐
                    │      │
                    └──────┘
```

# Fig.4

13

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1638032 A1
- DE 2729697 A1
- DE 3413855 A1
- EP 0048851 B1
- DE 3426863 A1
- DE 3302063 A1
- US 5305241 A
- DE 4443898 A1